# EUROPEAN PATENT APPLICATION

(11) **EP 2 866 292 A1**
(43) Date of publication of application: **29.04.2015**
(21) Application number: 14183084.4
(22) Date of filing: 01.09.2014
(51) Int. Cl.: H01M 10/056, H01M 10/0567, H01M 10/0564

(54) **lithium battery comprising tricynoalkylborate electrolyte additive.**

(30) Priority: 25.10.2013 KR 20130128047
(71) Applicant: Samsung SDI Co., Ltd., Yongin-si, Gyeonggi-do (KR)
(72) Inventor: Bae, Tae-Hyun, Gyeonggi-do (KR); Shin, Woo-Cheol, Gyeonggi-do (KR); Eom, Sang-Hyun, Gyeonggi-do (KR); Kim, Myung-Hoon, Gyeonggi-do (KR); Lee, Seung-Tae, Gyeonggi-do (KR); Kim, Ae-Ran, Gyeonggi-do (KR); Choi, Dong-Myung, Gyeonggi-do (KR); Lee, Ha-Rim, Gyeonggi-do (KR)
(74) Representative: Russell, Tim

(57) **Abstract**

Disclosed is a rechargeable lithium battery including a negative electrode including a negative active material, a positive electrode, and an electrolyte solution including an additive, wherein the negative active material includes a Si-based material, and the additive includes fluoroethylene carbonate and a compound represented by the following Chemical Formula 1.

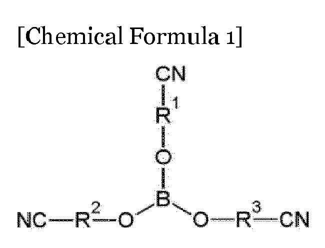

In the above Chemical Formula 1, R¹ to R³ are independently a substituted or unsubstituted C2 to C5 alkylene group.

## Description

A rechargeable lithium battery is disclosed.

A lithium polymer battery may be manufactured to have various shapes and specifically, a thin film and accordingly, applied to a small IT device such as a smart phone, a tablet PC, a net book, and the like.

As these IT devices gradually require higher and higher performance, the battery used therein is requiring high-capacity. As the rechargeable lithium battery is required of high capacity, graphite as a negative electrode material may not so much sufficiently realize high-capacity as required for the rechargeable lithium battery.

Accordingly, a silicon-based active material has drawn attention as a negative electrode material due to higher charge and discharge capacity than the graphite. However, the silicon-based active material has a problem of sharp cycle-life deterioration, since an electrolyte solution is exhausted due to a reaction of silicon in the negative electrode with the electrolyte solution.

One embodiment provides a rechargeable lithium battery having improved cycle-life characteristics at room temperature and at high temperature during high voltage charge.

According to a first aspect, the invention provides a rechargeable lithium battery that includes a negative electrode which comprises a negative active material; a positive electrode which comprises a positive active material; and an electrolyte solution which comprises a lithium salt, an organic solvent and an additive, wherein the negative active material includes a Si-based material,
and the additive includes fluoroethylene carbonate and a compound represented by the following Chemical Formula 1.

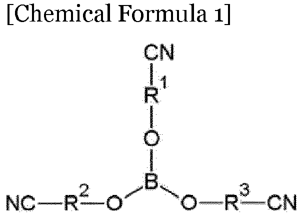

In the above Chemical Formula 1, R¹ to R³ are independently a substituted or unsubstituted C₂ to C₅ alkylene group. Preferably, R¹ to R³ are independently a substituted or unsubstituted C₂ or C₃ alkylene group.

In one embodiment, the compound represented by Chemical Formula 1 is a compound of Chemical Formula 2:

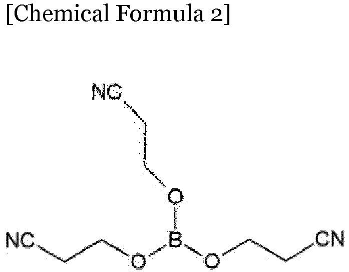

The compound represented by the above Chemical Formula 1 may be included in an amount of up to or equal to about 10 parts by weight, preferably from about 0.1 to about 10 parts by weight, more preferably from about 0.2 to about 3 parts by weight, based on 100 parts by weight of the organic solvent.

The fluoroethylene carbonate may be included in an amount of up to or equal to about 15 parts by weight, preferably from about 1 to 15 parts by weight, more preferably from about 5 to about 10 parts by weight, based on 100 parts by weight of the organic solvent.

The Si-based material may be included in an amount of up to or equal to about 70 wt%, preferably from about 1 to about 70 wt%, more preferably from about 7 to about 20 wt%, based on the total amount of the negative electrode.

The organic solvent may include a linear carbonate such as dimethyl carbonate, diethyl carbonate, dipropyl carbonate, methylpropyl carbonate, ethylpropyl carbonate, methylethyl carbonate, ethylmethyl carbonate, or a combination thereof; a cyclic carbonate such as ethylene carbonate, propylene carbonate, butylene carbonate, or a combination thereof; or a combination thereof, and specifically the organic solvent may include propylene carbonate.

The additive may further include LiB(C₂O₄)F₂ (lithium difluorooxalatoborate, LiFOB), and the LiB(C₂O₄)F₂ may be included in an amount of up to or equal to 5 parts by weight, preferably about 0.1 to about 5 parts by weight, based on 100 parts by weight of the organic solvent.

The Si-based material may include Si; SiOx (o<x≤2); a Si-Y alloy wherein Y is an element selected from an alkali metal, an alkaline-earth metal, a Group 13 to 16 element other than Si, a transition metal, a rare earth element, and a combination thereof; a SiC composite; or a combination thereof.

The rechargeable lithium battery may be charged at a voltage of about 4.0 to about 4.45 V. Accordingly, the rechargeable lithium battery may be configured to be charged at a voltage of about 4.0 to about 4.45 V.

In a further aspect, the invention relates to a rechargeable lithium battery, comprising a negative electrode which comprises a negative active material; a positive electrode which comprises a positive active material; and an electrolyte solution consisting of one or more lithium salts, one or more organic carbonate-based solvents and an additive, and byproducts formed therefrom, wherein the additive consists of fluoroethylene carbonate, a compound represented by Chemical Formula 1, and byproducts formed therefrom: 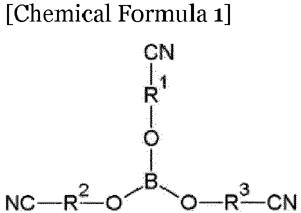 wherein R¹ to R³ are independently a substituted or unsubstituted C₂ to C₅ alkylene group.

A more complete appreciation of the present invention, and many of the attendant advantages thereof, will be readily apparent as the same becomes better understood by reference to the following detailed description when considered in conjunction with the accompanying drawings, wherein:
FIG. 1 is a schematic view showing a rechargeable lithium battery according to one embodiment.
FIG. 2 is a graph showing an XPS (X-ray photoelectron spectroscopy) analysis of the rechargeable lithium battery cell according to Example 1.
FIG. 3 is a graph showing an XPS (X-ray photoelectron spectroscopy) analysis of the rechargeable lithium battery cell according to Comparative Example 1.
FIG. 4 is a graph showing a cyclic voltammetry analysis of a rechargeable lithium battery cell according to Example 1.
FIG. 5 is a graph showing a cyclic voltammetry analysis of a rechargeable lithium battery cell according to Comparative Example 1.
FIG. 6 is a graph showing room temperature cycle-life characteristics of the rechargeable lithium battery cells according to Example 1 and Comparative Example 1.
FIG. 7 is a graph showing high temperature cycle-life characteristics of the rechargeable lithium battery cells according to Examples 1 to 3 and Comparative Example 1.

As used herein, when a definition is not otherwise provided, the term 'substituted' may refer to one substituted with a substituent selected from a halogen (F, Br, Cl or I), a hydroxy group, an alkoxy group, a nitro group, a cyano group, an amino group, an azido group, an amidino group, a hydrazino group, a hydrazono group, a carbonyl group, a carbamyl group, a thiol group, an ester group, a carboxyl group or a salt thereof, a sulfonic acid group or a salt thereof, a phosphoric acid or a salt thereof, a C₁ to C₂₀ alkyl group, a C₂ to C₂₀ alkenyl group, a C₂ to C₂₀ alkynyl group, a C6 to C₃₀ aryl group, a C₇ to C₃₀ arylalkyl group, a C₁ to C₄ alkoxy group, a C₁ to C₂₀ heteroalkyl group, a C₃ to C₂₀ heteroarylalkyl group, a C₃ to C₃₀ cycloalkyl group, a C₃ to C₁₅ cycloalkenyl group, a C6 to C₁₅ cycloalkynyl group, a C₂ to C₂₀ heterocycloalkyl group, and a combination thereof, instead of hydrogen of compound.

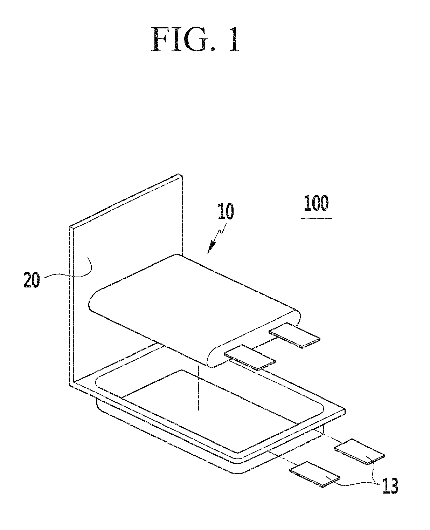

Referring to FIG. 1, a rechargeable lithium battery 100 according to one embodiment includes an electrode assembly 10, a battery case 20 housing the electrode assembly 10, and an electrode tab 13 playing a role of an electrical channel for externally inducing a current formed in the electrode assembly 10. Both sides of the battery case 20 are overlapped and sealed. In addition, an electrolyte solution is injected into the battery case 20 housing the electrode assembly 10.

The electrode assembly 10 includes a positive electrode, a negative electrode facing the positive electrode and a separator interposed between the negative electrode and the positive electrode, wherein the electrolyte solution is impregnated in the positive electrode, the negative electrode and the separator.

The electrolyte solution may include a lithium salt, an organic solvent, and an additive. The additive may include fluoroethylene carbonate and a compound represented by the following Chemical Formula 1.

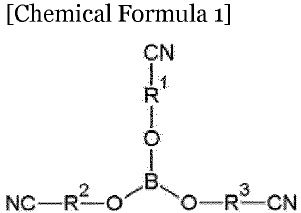

In the above Chemical Formula 1, R¹ to R³ are independently a substituted or unsubstituted C₂ to C₅ alkylene group.

The compound represented by the above Chemical Formula 1 may function as an anion receptor. Such a compound is added to an electrolyte solution and thereby a reaction of an electrolyte solution with a negative active material, specifically Si-based material may be suppressed, and thus battery performance is improved.

Specifically, a lithium salt of the electrolyte solution may have a reaction with the Si-based material of the negative electrode on the surface of the Si-based material as follows. The lithium salt is illustrated by using LiPF₆ as an example, and the Si-based material is illustrated by using SiO₂ as an example, but kinds of the lithium salt and the Si-based material are respectively limited thereto.
1) LiPF₆ (Li⁺ + PF₆⁻) → LiF + PF₅
2) PF₅ + H₂O → PF₃O + 2HF
3) HF + Li + e⁻ → LiF + 1/2H₂
4) HF + Li₂CO₃ → 2LiF + H₂CO₃
5) SiO₂ +4HF → SiF₄ + H₂O
6) SiO₂ +6HF → H₂SiF₆

The electrolyte solution reacts with the Si-based material of the negative electrode through this mechanism and may deteriorate battery performance. In one embodiment, the compound represented by the above Chemical Formula 1 is bonded with an anion such as PF₆⁻, a reaction of lithium ion into LiF in the 1) reaction may be suppressed to make the number of reversible lithium ions increase, or the compound represented by the above Chemical Formula 1 may dissociate the LiF even though the lithium ion becomes LiF. Accordingly, a reaction of an electrolyte solution with a Si-based material of a negative electrode is suppressed and cycle-life characteristics at room temperature and high temperature may be improved.

In the above Chemical Formula 1, when the alkylene group has about 2 to about 5 carbons, the compound functions well as an anion receptor. As a result, the reaction between the electrolyte solution and the Si-based material of a negative electrode may be suppressed well.

The compound represented by the above Chemical Formula 1 may be included in an amount of up to or equal to about 10 parts by weight, specifically about 0.1 to about 10 parts by weight, and more specifically about 0.2 to about 3 parts by weight based on 100 parts by weight of the organic solvent. When the compound represented by the above Chemical Formula 1 is included within the range, the compound functions as an anion receptor easily, a reaction of an electrolyte solution with a Si-based material of a negative electrode may be suppressed well.

The fluoroethylene carbonate is decomposed earlier than carbonate such as ethylene carbonate used as an organic solvent and may form a stable SEI film on the surface of the negative electrode and thus, improve performance of a rechargeable lithium battery.

The fluoroethylene carbonate may be included in an amount of up to or equal to about 15 parts by weight, specifically about 1 to about 15 parts by weight, and more specifically about 5 to about 10 parts by weight based on 100 parts by weight of the organic solvent. When the fluoroethylene carbonate is included within the range, cycle-life characteristics of a rechargeable lithium battery may be improved at room temperature and at high temperature without capacity deterioration.

The additive may further include LiB(C₂O₄)F₂ (lithium difluorooxalatoborate, LiFOB). The LiB(C₂O₄)F₂ has small resistance against the Si-based material of the negative electrode and may more improve cycle-life characteristics at room temperature and a high temperature.

The LiB(C₂O₄)F₂ may be included in an amount of up to or equal to about 5 parts by weight, specifically about 0.1 to about 5 parts by weight, and more specifically about 1 to about 3 parts by weight based on 100 parts by weight of the organic solvent. When the LiB(C₂O₄)F₂ is included within the range, cycle-life characteristics at room temperature and a high temperature may be improved without capacity deterioration.

The additive may further include vinylethylene carbonate, propane sultone, succinonitrile, adiponitrile, or a combination thereof besides the above additive. The organic solvent serves as a medium for transmitting ions taking part in the electrochemical reaction of a battery and may include linear carbonate, cyclic carbonate or a combination thereof.

The linear carbonate may include dimethyl carbonate, diethyl carbonate, dipropyl carbonate, methylpropyl carbonate, ethylpropyl carbonate, methylethyl carbonate, ethylmethyl carbonate, or a combination thereof, and the cyclic carbonate may include ethylene carbonate, propylene carbonate, butylene carbonate, or a combination thereof. Among them, propylene carbonate may further improve cycle-life characteristics at room temperature and at high temperature.

When the linear carbonate is mixed with the cyclic carbonate, a solvent having a high dielectric constant and a low viscosity may be provided. The cyclic carbonate and the linear carbonate are mixed together in a volume ratio ranging from about 1:1 to about 1:9.

The organic solvent may further include one selected from an ester-based, ether-based, ketone-based, alcohol-based solvent, and an aprotic solvent.

The ester-based solvent may include, for example methylacetate, ethylacetate, n-propylacetate, dimethylacetate, methylpropionate, ethylpropionate, γ-butyrolactone, decanolide, valerolactone, mevalonolactone, caprolactone, or the like. The ether solvent may include, for example dibutylether, tetraglyme, diglyme, dimethoxyethane, 2-methyltetrahydrofuran, tetrahydrofuran, and the like, and the ketone-based solvent may include cyclohexanone, and the like. The alcohol-based solvent may include, for example ethyl alcohol, isopropyl alcohol, and the like.

The lithium salt is dissolved in an organic solvent, supplies lithium ions in a battery, basically operates the rechargeable lithium battery, and improves lithium ion transportation between positive and negative electrodes therein.

The lithium salt may include LiPF₆, LiBF₄, LiSbF₆, LiAsF₆, LiN(SO₃C₂F₅)₂, LiC₄F₉SO₃, LiClO₄, LiAlO₂, LiAlCl₄, LiN(CₓF₂ₓ₊₁SO₂)(C_{y}F_{2y+1}SO₂) (where x and y are natural numbers), LiCl, LiI, LiB(C₂O₄)₂ (lithium bisoxalatoborate (LiBOB)) or a combination thereof.

The lithium salt may be used in a concentration ranging from about 0.1 M to about 2.0 M. When the lithium salt is included within the above concentration range, an electrolyte may have improved performance and lithium ion mobility due to optimal electrolyte conductivity and viscosity.

The negative electrode includes a negative current collector and a negative active material layer disposed thereon.

The negative current collector may be a copper foil, a nickel foil, a stainless steel foil, a titanium foil, a nickel foam, a copper foam, a polymer substrate coated with a conductive metal, or a combination thereof, but is not limited thereto.

The negative active material layer may include a negative active material, a binder, and optionally a conductive material.

The negative active material includes a Si-based material. The above electrolyte solution additive suppresses a reaction between the Si-based material and the electrolyte solution and thus battery performance may be improved.

The Si-based material may include Si; SiOx (o<x≤2); a Si-Y alloy (where Y is an element selected from an alkali metal, an alkaline-earth metal, a Group 13 to 16 element other than Si, a transition metal, a rare earth element, and a combination thereof,); a Si-C composite; or a combination thereof. The Y may be specifically selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po and a combination thereof.

The Si-based material may be included in an amount of up to or equal to about 70 wt%, specifically about 1 to about 70 wt%, and more specifically about 7 to about 20 wt% based on the total amount of the negative electrode, and specifically the negative active material layer. When the Si-based material is included within the above range, the above electrolyte solution additive need not be used in a large amount, and thus high-capacity and cycle-life characteristics of a battery may be improved.

The negative active material may further include a carbon-based material, a lithium metal alloy, a transition metal oxide, or a combination thereof, besides the Si-based material.

The carbon-based material may include crystalline carbon, amorphous carbon, or a combination thereof. The crystalline carbon may include graphite, and examples of the graphite may include non-shaped, sheet-shaped, flake-shaped, a spherical shape or fiber-shaped natural graphite or artificial graphite. The amorphous carbon may include soft carbon or hard carbon, a mesophase pitch carbonized product, fired coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

The transition metal oxide may be vanadium oxide, lithium vanadium oxide, and the like.

The binder improves binding properties of negative active material particles with one another and with a current collector, and examples thereof may be polyvinyl alcohol, carboxylmethyl cellulose, hydroxypropyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change. Examples thereof may be a carbon-based material such as natural graphite, artificial graphite, carbon black, acetylene black, ketjen black, a carbon fiber and the like; a metal-based material such as a metal powder or a metal fiber and the like of copper, nickel, aluminum, silver, and the like; a conductive polymer such as a polyphenylene derivative and the like; or a mixture thereof.

The positive electrode may include a positive current collector and a positive active material layer formed on the positive current collector. The positive active material layer includes a positive active material, a binder, and optionally a conductive material. The positive current collector may be Al (aluminum), but is not limited thereto.

The positive active material may be a compound being capable of intercalating and deintercallating lithium. Specifically, at least one composite oxide of lithium and a metal of cobalt, manganese, nickel, or a combination thereof may be used, and specific examples thereof may be a compound represented by one of the following chemical formulae:
LiₐA_{1-b}B_{b}D₂ (wherein, in the above chemical formula, 0.90 ≤ a ≤ 1.8 and 0 ≤ b ≤ 0.5); LiₐE₁₋bB_{b}O_{2-c}D_{c} (wherein, in the above chemical formula, 0.90 ≤ a ≤ 1.8, 0 ≤ b ≤ 0.5, 0 ≤ c ≤ 0.05); LiE_{2-b}B_{b}O_{4-c}D_{c} (wherein, in the above chemical formula, 0 ≤ b ≤ 0.5, 0 ≤ c ≤ 0.05); LiₐNi_{1-b-c}Co_{b}B_{c}D_{α} (wherein, in the above chemical formula, 0.90 ≤ a ≤ 1.8, 0 ≤ b ≤ 0.5, 0 ≤ c ≤ 0.05, o < α ≤ 2); LiₐNi_{1-b-c}Co_{b}B_{c}O_{2-α}F_{α} (wherein, in the above chemical formula, 0.90 ≤ a ≤ 1.8, 0 ≤ b ≤ 0.5, 0 ≤ c ≤ 0.05, 0 < α < 2); LiₐN_{1-b-c}Co_{b}B_{c}O_{2-α}F₂ (wherein, in the above chemical formula, 0.90 ≤ a ≤ 1.8, 0 ≤ b ≤ 0.5, 0 ≤ c ≤ 0.05, 0 < α < 2); LiₐNi_{1-b-c}Mn_{b}B_{c}D_{α} (wherein, in the above chemical formula, 0.90 ≤ a ≤ 1.8, 0 ≤ b ≤ 0.5, 0 ≤ c ≤ 0.05, 0 < α ≤ 2); LiₐNi_{1-b-c}Mn_{b}B_{c}O_{2-α}F_{α} (wherein, in the above chemical formula, 0.90 ≤ a ≤ 1.8, 0 ≤ b ≤ 0.5, 0 ≤ c ≤ 0.05, o < α < 2); LiₐNi_{1-b-c}Mn_{b}B_{c}O_{2-α}F₂ (wherein, in the above chemical formula, 0.90 ≤ a ≤ 1.8, 0 ≤ b ≤ 0.5, 0 ≤ c ≤ 0.05, 0 < α < 2); LiₐNi_{b}E_{c}G_{d}O₂ (wherein, in the above chemical formula, 0.90 ≤ a ≤ 1.8, 0 ≤ b ≤ 0.9, 0 ≤ c ≤ 0.5, 0.001 ≤ d ≤ 0.1); LiₐNi_{b}Co_{c}Mn_{d}GₑO₂ (wherein, in the above chemical formula, 0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (wherein, in the above chemical formula, 0.90 ≤ a ≤ 1.8, 0.001 ≤ b ≤ 0.1); LiₐCoG_{b}O₂ (wherein, in the above chemical formula, 0.90 ≤ a ≤ 1.8, 0.001 ≤ b ≤ 0.1); LiₐMnG_{b}O₂ (wherein, in the above chemical formula, 0.90 ≤ a ≤ 1.8, 0.001 ≤ b ≤ 0.1); LiₐMn₂G_{b}O₄ (wherein, in the above chemical formula, 0.90 ≤ a ≤ 1.8, 0.001 ≤ b ≤ 0.1); QO₂; QS₂; LiQS₂; V₂O₅; LiV₂O₅; LiIO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In the above chemical formulae, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof.

The positive active material may be more specifically, lithium cobalt oxide, lithium nickel cobalt manganese oxide, lithium nickel cobalt aluminum oxide, or a combination thereof.

The binder improves binding properties of positive active material particles with one another and with a current collector, and specific examples may be polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like, but are not limited thereto.

The conductive material improves conductivity of an electrode. Any electrically conductive material may be used as a conductive material, unless it causes a chemical change. Examples thereof may be one or more of natural graphite, artificial graphite, carbon black, acetylene black, ketjen black, a carbon fiber, copper, a metal powder, a metal fiber or the like of nickel, aluminum, silver, and the like, or a conductive material such as a polyphenylene derivative and the like.

The negative electrode and the positive electrode may be manufactured by a method including mixing an active material, a conductive material, and a binder into an active material composition and coating the composition on a current collector. The electrode manufacturing method is well known, and thus is not described in detail in the present specification. The solvent includes N-methylpyrrolidone and the like, but is not limited thereto.

The separator may include any materials commonly used in the conventional lithium battery as long as separating the negative electrode from the positive electrode and providing a transporting passage for lithium ion. In other words, the separator may have a low resistance to ion transportation and an excellent impregnation for an electrolyte solution. For example, it may be selected from a glass fiber, polyester, polyethylene, polypropylene, polytetrafluoroethylene (PTFE), or a combination thereof. It may have a form of a non-woven fabric or a woven fabric. For example, a polyolefin-based polymer separator such as polyethylene, polypropylene or the like is mainly used for a lithium ion battery. In order to ensure the heat resistance or mechanical strength, a coated separator including a ceramic component or a polymer material may be used. Selectively, it may have a mono-layered or multi-layered structure.

The rechargeable lithium battery according to one embodiment may be configured to be charged at a high voltage of about 4.0 to about 4.45 V. Even though the rechargeable lithium battery is charged within the high voltage range, excellent cycle-life characteristics at room temperature and a high temperature may be secured.

Hereinafter, the embodiments are illustrated in more detail with reference to examples.

### Example 1

### (Manufacture of Positive Electrode)

A positive active material layer composition was prepared by mixing a mixture of 80 wt% of LiCoO₂ and 20 wt% of LiNi_{0.5}Co_{0.2}Mn_{0.3}O₂, polyvinylidene fluoride (PVdF), and carbon black in a weight ratio of 92:4:4 and dispersing the obtained mixture in N-methyl-2-pyrrolidone. The positive active material layer composition was coated on a 20 µm-thick aluminum foil, dried, and compressed, manufacturing a positive electrode.

### (Manufacture of Negative Electrode)

A negative active material layer composition was prepared by mixing a mixture of 90 wt% of graphite and Si alloy (CV4, 3M) and polyvinylidene fluoride (PVdF) in a weight ratio of 92:8 and dispersing the resulting mixture in N-methyl-2-pyrrolidone. The negative active material layer composition was coated on a 15 µm-thick copper foil, dried, and compressed, manufacturing a negative electrode.

### (Preparation of Electrolyte Solution)

An electrolyte solution was prepared by mixing ethylene carbonate (EC), ethylmethyl carbonate (EMC), and diethyl carbonate (DEC) in a volume ratio of 3:5:2 to prepare a mixed solvent, dissolving 1.3 M LiPF₆ in the mixed solvent, and adding 10 parts by weight of fluoroethylene carbonate and 0.2 parts by weight of a compound represented by the following Chemical Formula 2 based on 100 parts by weight of the mixed solvent to the solution.

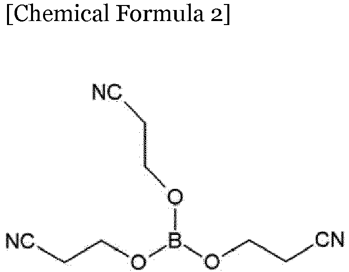

### (Manufacture of Rechargeable Lithium Battery Cell)

The positive electrode and the negative electrode along with an 18 µm-thick polyethylene separator were spirally wound, manufacturing an electrode assembly. Subsequently, the electrode assembly was put in a battery case, and the electrolyte solution was inserted into the battery case, manufacturing a rechargeable lithium battery cell.

### Example 2

A rechargeable lithium battery cell was manufactured according to the same method as Example 1 except for preparing the electrolyte solution by using a mixed solvent of ethylene carbonate (EC), propylene carbonate (PC) and diethyl carbonate (DEC) at a volume ratio of 2:2:6.

### Example 3

A rechargeable lithium battery cell was manufactured according to the same method as Example 2 except for preparing the electrolyte solution by adding 3 parts by weight of LiB(C₂O₄)F₂ in 100 parts by weight of the mixed solvent.

### Comparative Example 1

A rechargeable lithium battery cell was manufactured according to the same method as Example 1 except for not adding the compound represented by the above Chemical Formula 2.

### Evaluation 1: XPS Analysis of Rechargeable Lithium Battery Cell

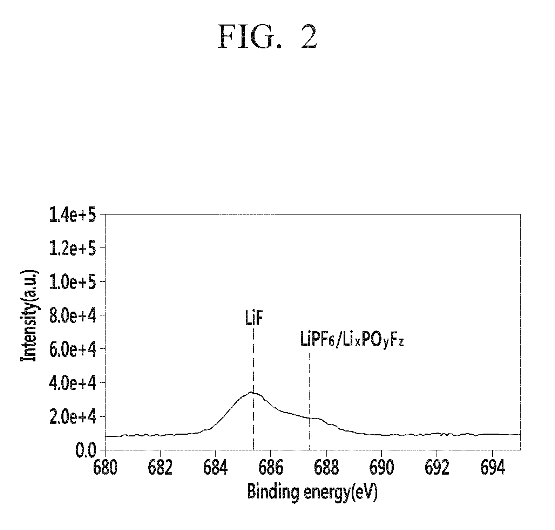

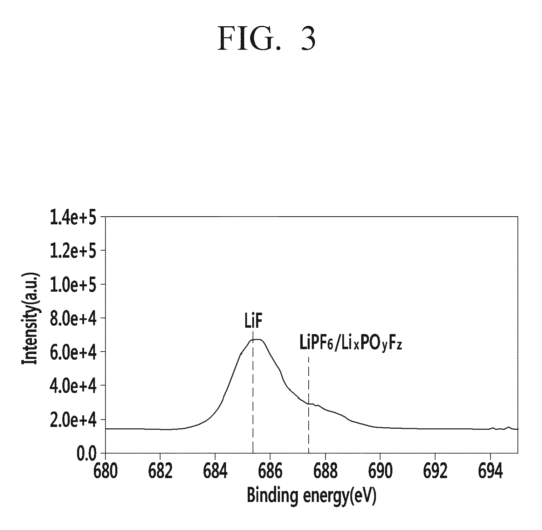

XPS (X-ray photoelectron spectroscopy) analyses for the rechargeable lithium battery cells according to Example 1 and Comparative Example 1 are carried out, and the results are shown in FIGS. 2 and 3.

FIG. 2 is a graph showing an XPS (X-ray photoelectron spectroscopy) analysis of the rechargeable lithium battery cell according to Example 1, and FIG. 3 is a graph showing an XPS (X-ray photoelectron spectroscopy) analysis of the rechargeable lithium battery cell according to Comparative Example 1.

Referring to FIGS. 2 and 3, a LiF content of Example 1 decreased relative to that of Comparative Example 1. These results demonstrate that the compound represented by Chemical Formula 1 as an electrolyte solution additive functions as an anion receptor and suppresses the reaction of lithium ions into LiF, and accordingly a reaction of the Si-based material of a negative electrode with an electrolyte solution may be suppressed.

### Evaluation 2: Irreversible Characteristic of Negative Electrode

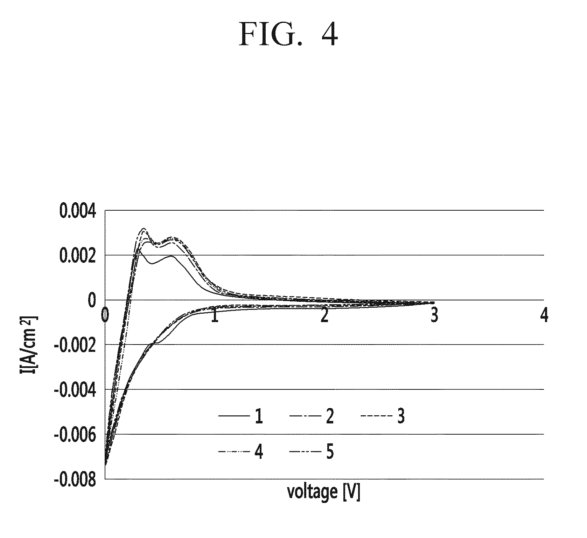

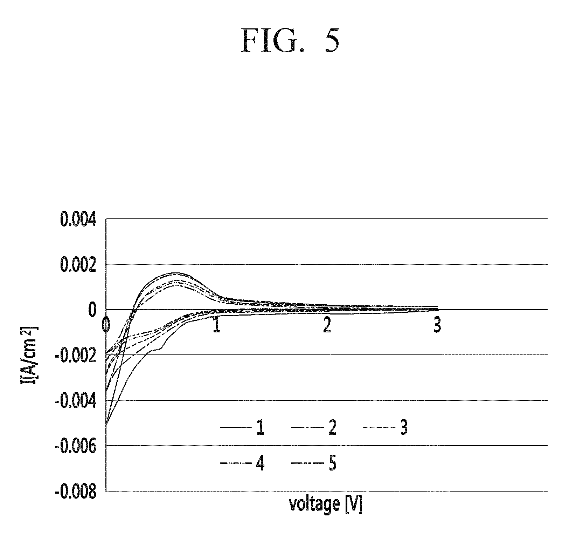

Irreversible characteristics of the negative electrodes of Example 1 and Comparative Example 1 were evaluated by using a negative electrode as a working electrode and a lithium metal as a reference electrode and a counter electrode and performing a cyclic voltammetry analysis from 0V to 3V at a speed of 1 mV/s, and the results are provided in FIGS. 4 and 5.

FIG. 4 is a graph showing a cyclic voltammetry analysis of a rechargeable lithium battery cell according to Example 1, and FIG. 5 is a graph showing a cyclic voltammetry analysis of a rechargeable lithium battery cell according to Comparative Example 1.

Referring to FIGS. 4 and 5, FIG. 5 shows that a current peak in an area ranging from about 0V to 1V decreases as a cycle goes, and FIG. 4 shows that that the current peak disappears away as a cycle goes. The reason is that the rechargeable lithium battery cell of Example 1 in FIG. 4 showed more reversible lithium ion than that of Comparative Example 1 in FIG. 5.

### Evaluation 3: Cycle-Life Characteristics of Rechargeable Lithium Battery Cell

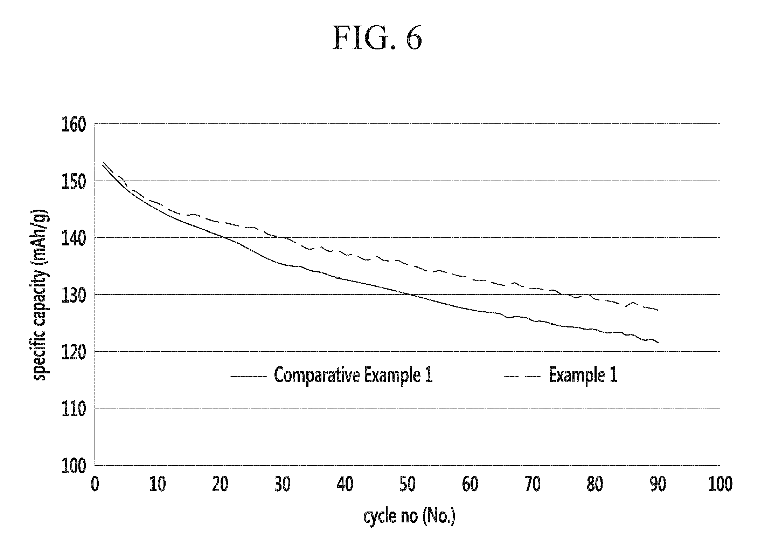

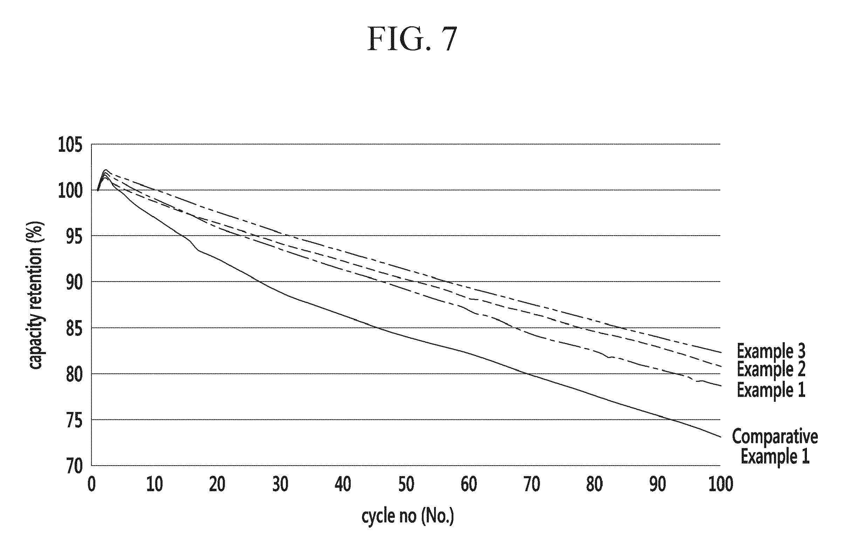

The rechargeable lithium battery cells according to Examples 1 to 3 and Comparative Example 1 were charged at 4.4V and 0.7C at room temperature and 45°C, respectively and then, discharged at 2.75V and 0.5C, discharge capacity of the rechargeable lithium battery cells depending on a cycle was evaluated after 100 times repeating this charge and discharge, and the results are provided in FIGS. 6 and 7.

FIG. 6 is a graph showing room temperature cycle-life characteristics of the rechargeable lithium battery cells according to Example 1 and Comparative Example 1.

Referring to FIG. 6, Example 1 where fluoroethylene carbonate and the compound represented by Chemical Formula 1 were added in the electrolyte solution showed improved cycle-life characteristics at room temperature, compared with Comparative Example 1 where the compound represented by the above Chemical Formula 1 was not added.

FIG. 7 is a graph showing high temperature cycle-life characteristics of the rechargeable lithium battery cells according to Examples 1 to 3 and Comparative Example 1. Referring to FIG. 7, Examples 1 to 3 where fluoroethylene carbonate and the compound represented by Chemical Formula 1 were added in the electrolyte solution showed improved cycle-life characteristics at high temperature, compared with Comparative Example 1 where the compound represented by the above Chemical Formula 1 was not added.

From Examples 1 to 3, it is also seen that improvement of high temperature cycle-life characteristics may be further realized when propylene carbonate is used as solvent, and even more excellently realized when LiFOB was added along with propylene carbonate solvent.

Whilst the present invention has been described in connection with certain exemplary embodiments thereof, it is to be understood that the invention is not linked to the disclosed embodiments but, on the contrary, is intended to cover various modifications and equivalent arrangements included within the scope of the appended claims.

## Claims

1. A rechargeable lithium battery, comprising
a negative electrode which comprises a negative active material;
a positive electrode which comprises a positive active material; and
an electrolyte solution which comprises a lithium salt, an organic solvent and an additive,
wherein the negative active material comprises a Si-based material, and
the additive comprises fluoroethylene carbonate and a compound represented by Chemical Formula 1: 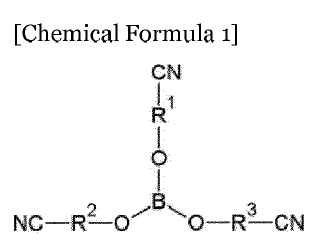 wherein R¹ to R³ are independently a substituted or unsubstituted C₂ to C₅ alkylene group.

2. The rechargeable lithium battery of claim 1, wherein the compound represented by Chemical Formula 1 is included in an amount of up to or equal to about 10 parts by weight based on 100 parts by weight of the organic solvent, preferably in an amount of about 0.1 to about 10 parts by weight based on 100 parts by weight of the organic solvent.

3. The rechargeable lithium battery of claim 2, wherein the compound represented by Chemical Formula 1 is included in an amount of about 0.2 to about 3 parts by weight based on 100 parts by weight of the organic solvent.

4. The rechargeable lithium battery of any one of claims 1 to 3, wherein the fluoroethylene carbonate is included in an amount of up to or equal to about 15 parts by weight based on 100 parts by weight of the organic solvent, preferably in an amount of about 1 to 15 parts by weight based on 100 parts by weight of the organic solvent.

5. The rechargeable lithium battery of claim 4, wherein the fluoroethylene carbonate is included in an amount of about 5 to 10 parts by weight based on 100 parts by weight of the organic solvent.

6. The rechargeable lithium battery of any one of claims 1 to 5, wherein the Si-based material is included in an amount of up to or equal to about 70 wt% based on the total amount of the negative electrode, preferably in an amount of about 1 to about 70 wt% based on the total amount of the negative electrode.

7. The rechargeable lithium battery of claim 6, wherein the Si-based material is included in an amount of about 7 to about 20 wt% based on the total amount of the negative electrode.

8. The rechargeable lithium battery of any one of claims 1 to 7, wherein R¹ to R³ are independently a substituted or unsubstituted C2 or C3 alkylene group.

9. The rechargeable lithium battery of any one of claims 1 to 8, wherein the organic solvent comprises linear carbonate including dimethyl carbonate, diethyl carbonate, dipropyl carbonate, methylpropyl carbonate, ethylpropyl carbonate, methylethyl carbonate, ethylmethyl carbonate, or a combination thereof; cyclic carbonate including ethylene carbonate, propylene carbonate, butylene carbonate, or a combination thereof; or a combination thereof.

10. The rechargeable lithium battery of claim 9, wherein the organic solvent comprises propylene carbonate.

11. The rechargeable lithium battery of any one of claims 1 to 10, wherein the additive further comprises LiB(C₂O₄)F₂ (lithium difluorooxalatoborate, LiFOB).

12. The rechargeable lithium battery of claim 11, wherein the LiB(C₂O₄)F₂ is included in an amount of about 0.1 to about 5 parts by weight based on 100 parts by weight of the organic solvent.

13. The rechargeable lithium battery of any one of claims 1 to 12, wherein the Si-based material comprises Si; SiOx (o<x≤2); a Si-Y alloy wherein Y is an element selected from an alkali metal, an alkaline-earth metal, a Group 13 to 16 element other than Si, a transition metal, a rare earth element, and a combination thereof; a Si-C composite; or a combination thereof.

14. The rechargeable lithium battery of any one of claims 1 to 13, wherein the rechargeable lithium battery is configured to be charged at a voltage of about 4.0 to about 4.45 V.

15. A rechargeable lithium battery, comprising
a negative electrode which comprises a negative active material;
a positive electrode which comprises a positive active material; and
an electrolyte solution consisting of one or more lithium salts, one or more organic carbonate-based solvents and an additive, and optionally byproducts formed therefrom,
wherein the additive consists of fluoroethylene carbonate, a compound represented by Chemical Formula 1, and optionally byproducts formed therefrom: 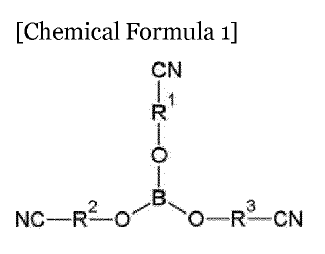 wherein R¹ to R³ are independently a substituted or unsubstituted C2 to C5 alkylene group.
